# EUROPÄISCHE PATENTSCHRIFT

(11) **EP 2 698 571 B1**
(45) Veröffentlichungstag und Bekanntmachung des Hinweises auf die Patenterteilung: **10.05.2017**
(21) Anmeldenummer: 13003994.4
(22) Anmeldetag: 09.08.2013
(51) Int. Cl.: F16L 1/10, B05D 7/14, B25B 5/14, B23K 37/053

(54) **SCHNELLKUPPLUNG MIT EINER RINGSCHEIBE UND EINER DARAUF AUFGESETZTEN SPREIZVORRICHTUNG**
QUICK CONNECTOR WITH A DISC RING AND A SPREADING DEVICE PLACED THEREON
RACCORD RAPIDE DOTÉ D'UNE PLAQUE ANNULAIRE ET D'UN DISPOSITIF D'ÉCARTEMENT DISPOSÉ SUR CELLE-CI

(30) Priorität: 14.08.2012 RU 2012134757
(43) Veröffentlichungstag der Anmeldung: 19.02.2014
(73) Patentinhaber: Isaev, Evgenii V., 607060 Nigny Novgorod District (RU)
(72) Erfinder: Isaev, Evgenii V., 607060 Nigny Novgorod District (RU)
(74) Vertreter: Jeck, Anton

(56) Entgegenhaltungen:
- WO-A1-2010/062177
- AT-B- 391 100
- DE-A1- 4 207 375
- DE-C1- 10 065 793
- US-A- 5 568 893

## Beschreibung

Die Erfindung betrifft eine Schnellkupplung mit einer Ringscheibe und einer darauf aufgesetzten Spreizvorrichtung nach dem Oberbegriff des Anspruchs 1.

Die Erfindung bezieht sich auf die Herstellung von Großstahlrohren mit einem Durchmesser von 530 mm bis 1420 mm. Sie kann in verfahrenstechnischen Abläufen beim Auftrag eines Polyäthylen-Rostschutzanstrichs auf Rohre zur Verbindung und Zentrierung der Rohrenden vor einer Beschichtung angewendet werden.

Aus dem Stand der Technik ist eine Einrichtung der Fa. Dhatec, Niederlande, zur Verbindung von Großrohren vor dem Rostschutzanstrich bekannt (s. Internet, Seite der Fa. http://www.dhatec.nl/). Die Einrichtung besteht aus einem Ringgerüst mit einer darauf befestigten Spreizvorrichtung. Die Spreizvorrichtung enthält Einstellrollen und Abstützflächen zur Lagesicherung der Einrichtung in dem Rohr sowie einen Antrieb zur Sicherstellung der Funktion der Vorrichtung.

Diese Einrichtung ist eine komplexe, sperrige und schwere (200 kg) Konstruktion, die keine zuverlässige Verbindung der Rohre bietet und wegen zu großem Gewicht betriebsunfreundlich ist. Die Montage und Demontage dieser Einrichtung bedarf spezieller Hebevorrichtungen. Außerdem leistet diese Einrichtung einen beachtlichen Strömungswiderstand beim Trocknen der verbundenen Rohre mit einer Luftspülung aufgrund umfangreicher Verflechtung der Zugstangen und anderer Bauteile.

Aus dem Stand der Technik ist auch eine Kupplung zur Feststellung und Zentrierung von Großrohren unmittelbar vor ihrer Beschichtung mit Polyäthylen gemäß Figur 1 der WO 2010/062177 A1 bekannt. Diese Kupplung enthält eine Ringscheibe mit einer darauf aufgesetzten Spreizvorrichtung und einen Schraubenantrieb zur Sicherstellung der Funktion der Vorrichtung. Am Umfang der Spreizvorrichtung befinden sich Einstellstücke (Führungsschlitten) mit Stützflächen und Oval-Kegelrollen zum Einfahren in ein Rohr.

Der Gesamtheit der allgemeinen Merkmale nach liegt diese Einrichtung der erfindungsgemäßen Einrichtung am nächsten und ist ihr nächster Stand der Technik (Prototyp).

Diese Einrichtung beseitigt einige der Nachteile, die dem vorigem Stand der Technik eigen sind: Die Kupplung weist eine vereinfachte Bauweise auf und wiegt wesentlich weniger (ca. um 50 kg leichter). Sie ist auch betriebsfreundlicher. Zugleich ist sie immer noch ziemlich schwer (ca. 150 kg) und stellt keine zuverlässige Verbindung und Zentrierung der mit Polyäthylen zu beschichtenden Rohre sicher.

Die technischen Herstellungsbedingungen für Großrohre lassen eine Unrundheit der Rohrenden von bis zu 8 mm zu. Dadurch bleiben einige Rollen und Abstützflächen der Führungsschlitten beim Einfahren ins Rohr in der Luft hängen, ohne die Rohrinnenfläche zu berühren. Die Zentrierung und das Anpressen der Rohrenden erfolgt dabei nicht vollflächig über alle Stützflächen und Rollen. Das wirkt sich negativ auf die Verbindungssicherheit aus.

Während des Rohrtransports über einen Rollgang in die Spritzmaschine zum Polyäthylen-aufstrich gehen die Rohrenden infolge zufälliger stoßartiger Beanspruchungen auseinander. Dadurch entsteht ein ziemlich weiter Spalt, in den Polyäthylen hineinfließt. Die Folgen sind ein Überverbrauch von Polyäthylen und ein zusätzlicher Arbeitsaufwand, um die Verbindungsstellen der Rohre nachzuarbeiten.

Die deutsche Patentanmeldung DE 42 07 375 A1 offenbart eine Kupplung für das zeitweise koaxiale Verbinden von Einzelrohren zu einem Rohrstrang, die als doppelt konischer Formkörper ausgebildet und mit einem aufweitbaren, mittels eines Scherenhebels oder eines Spannkonus betätigbaren Spreizkörper verbunden ist.

Die deutsche Patentschrift DE 100 65 793 C1 beschreibt ebenfalls eine Kupplung für das zeitweise koaxiale Verbinden von Einzelrohren, welche mittels eines pneumatisch betätigbaren Spannmittels aufweitbare Klemmbacken aufweist, wobei die Zentrierung über einen zwischen den Einzelrohren angeordneten Zentrierring erfolgt.

Das österreichische Patent AT 391 100 B offenbart eine Führung für ein in einer achsnormalen Ebene zu bearbeitendes Rohr zur Zentrierung gegenüber einem Bearbeitungswerkzeug, wobei das Rohr über eine an seine Innenwandung anspreizbare Zentriereinrichtung einen mit einer achsnormalen Anschlagfläche zusammenwirkenden Axialanschlag trägt.

Das U.S.-amerikanische Patent US 5,568,893 A offenbart eine Zentriervorrichtung für zu verschweißende Rohre, bei der Klemmelemente mittels hydraulisch betätigbarer, gelenkig gelagerter Trägerarme gegen die Innenwände der zu verschweißenden Rohre im Bereich der zu bildenden Schweißnaht gepresst werden.

Es ist Aufgabe der Erfindung, eine bedienungsfreundlichere und leichtere Schnelleinrichtung (Schnellkupplung) mit verbesserten Betriebseigenschaften zu entwickeln.

Der erreichte technische Effekt ist eine Erhöhung der Rohrverbindungssicherheit, eine Verkürzung der Montage- und Demontagezeiten der Einrichtung während der Rohrverbindung und -zentrierung und eine Verminderung des Gewichts. Darüber hinaus wird ein wirtschaftlicher Nebeneffekt erreicht, und zwar die Verminderung des Polyäthylenverbrauchs.

Dieser technische Effekt wird wie folgt erreicht.

Die erfindungsgemäße Schnellkupplung enthält eine Ringscheibe mit einer darauf aufgesetzten Spreizvorrichtung und einen Schraubenantrieb zur Sicherstellung der Funktion der Schnellkupplung. Am Umfang der Spreizvorrichtung sind Einstellschlitten mit Stützflächen und Oval-Kegelrollen angeordnet, um die Einrichtung aufzustellen und in ein Rohr einzufahren. Gemäß der erfindungsgemäßen Schnellkupplung ist die Spreizvorrichtung in Form von gleichmäßig am Kreisumfang verteilten und radial ausgerichteten hohlen Doppelstangen ausgebildet. Jedes Paar der Doppelstangen bildet ein gleichschenkliges Dreieck mit einem an der Spitze geöffneten Winkel und einer Antriebsspindel an der Basis. Die Enden der auseinandergehenden Doppelstangen sind mit der Basis beweglich gegenseitig verbunden.

Das kennzeichnende Merkmal der erfindungsgemäßen Schnellkupplung gegenüber dem oben beschriebenen Stand der Technik (Kupplung der Fa. Selmers) ist die Ausbildung der Spreizvorrichtung in Form von gleichmäßig am Kreisumfang der Ringscheibe verteilten und radial ausgerichteten hohlen Doppelstangen. Dabei bildet jedes Paar der Doppelstangen ein gleichschenkliges Dreieck mit einem an der Spitze geöffneten Winkel und einer Antriebsspindel an der Basis aus. Die Enden der auseinandergehenden Doppelstangen sind mit der Basis beweglich gegenseitig verbunden.

Als weitere kennzeichnende Merkmale sind die Verbindung der auseinandergehenden Enden jedes Paars der Doppelstangen mit einer Antriebsspindel mit Hilfe von Zapfen, das Vorhandensein einer Ausgleichsbaugruppe an jeder der Doppelstangen, das Vorhandensein von einem Paar von Zahnrädern an der Anschlussstelle der Doppelstangen am geöffneten Winkel des Dreiecks und die Ausbildung eines Einsatzstücks aus einem Reibstoff am Kreisumfang der Seitenfläche jeder Oval-Kegelrolle.

Diese Merkmale in der Konstruktion der Kupplungseinrichtung ermöglichten es, das oben genannte technische Ergebnis zu erreichen und zwar:
eine Ausbildung der Spreizvorrichtung in Form von gleichmäßig am Kreisumfang der Ringscheibe verteilten hohlen Doppelstangen, wobei die optimale Menge der Doppelstangen sechs Paare beträgt. Dadurch kann das Gewicht wesentlich vermindert werden, so dass die Schnellkupplung ca. 90 kg wiegt. Das ist für das Bedienungspersonal während des Einsatzes der Schnellkupplung im Rohr von grundsätzlich großer Bedeutung;
das Vorhandensein von Ausgleichselementen an den Doppelstangen: Die Ausgleichs-elemente sorgen dafür, dass die Unrundheit der Rohre die Zuverlässigkeit der Verbindung nicht beeinträchtigt und dass der Kontakt zwischen den Stützflächen an einer beliebigen Stelle des Rohrs gesichert ist, wodurch auch die Verbindungssicherheit erhöht ist;
Einsatz von einem Paar von Zahnrädern an den Stangenenden des geöffneten Winkels des Dreiecks: Dadurch ist die Steifigkeit der Konstruktion erhöht. Das ist eine notwendige Sicherheitsmaßnahme bei einer Spreizkraft der Kupplung von 90 Tonnen;
die Reibungseinsatzstücke an den Seitenflächen der Oval-Kegelrollen stellen einen dichteren Kontakt beim Einfahren der Rollen in das zu verbindende Rohr sicher, wodurch die Bildung von Spalten zwischen den Rohrenden und das Einfließen von Polyäthylen in den Spalt vermieden ist.

Ein Ausführungsbeispiel der Erfindung ist in den Zeichnungen schematisch dargestellt. Es zeigen:

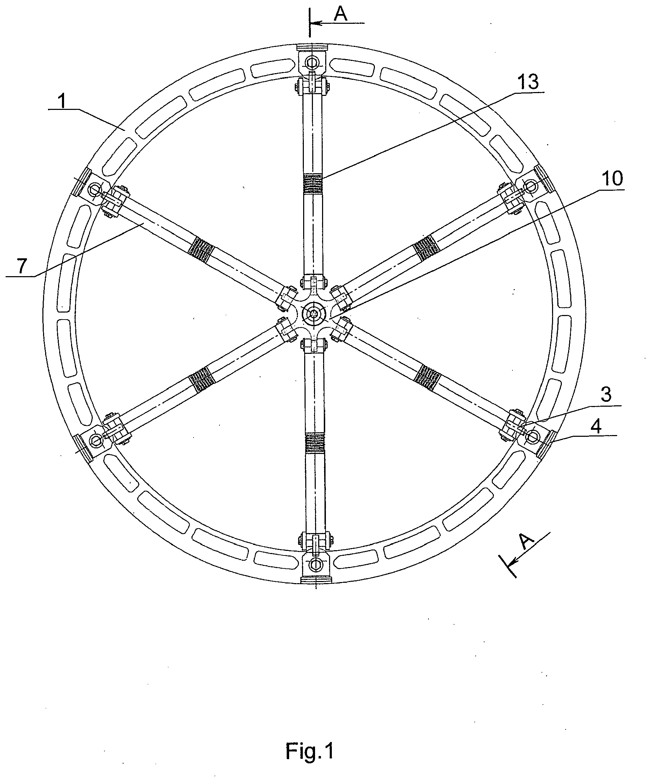

- Fig. 1: die Gesamtansicht der Schnellkupplung und

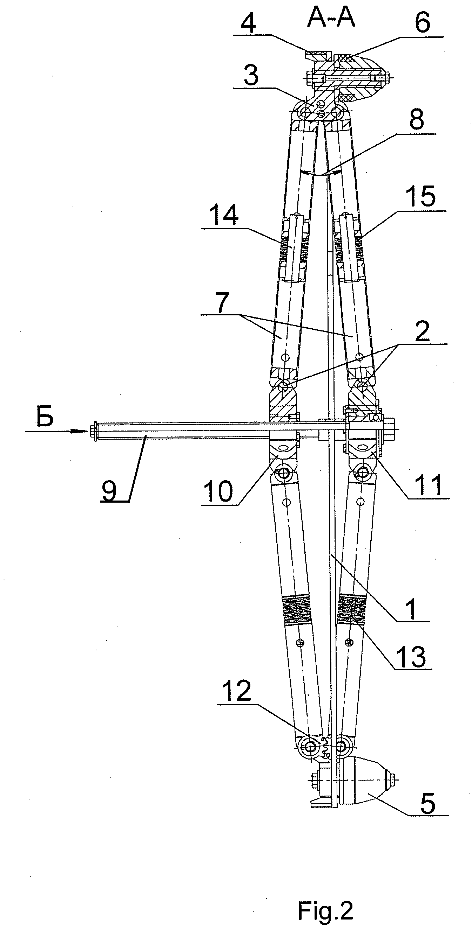

- Fig. 2: den Schnitt durch die Schnellkupplung entlang der Linie A-A der Fig. 1.

Die Schnellkupplung enthält eine gelochte Ringscheibe 1 mit einer darauf aufgesetzten Spreizvorrichtung 2. Am Umfang der Spreizvorrichtung 2 sind Einstellelemente (Schlitten) 3 mit Stützflächen 4 und Oval-Kegelrollen 5 angeordnet. Am Kreisumfang der Seitenfläche der Oval-Kegelrollen 5 ist ein Einsatzstück 6 aus einem Reibstoff ausgebildet. Die Spreizvorrichtung 2 stellt eine Gelenkhebelkonstruktion dar, die aus gleichmäßig am Kreisumfang der Ringscheibe 1 verteilten und radial ausgerichteten Doppelstangen 7 besteht. Die Doppelstangen 7 bilden gleichschenklige Dreiecke mit einem geöffneten Winkel 8 an der Spitze aus. Die Basis der Dreiecke ist eine Antriebsspindel 9 einer Antriebsvorrichtung. Außer der Antriebsspindel 9 schließt die Antriebsvorrichtung zwei Zapfen 10 und 11 ein. Der Zapfen 10 ist mit einem Schraubengewinde versehen, welches dem Spindelgewinde gleich ist. Der Zapfen 11 hat ein Loch mit einem Lager zur Aufnahme der Antriebsspindel 9. Die auseinandergehenden Enden jedes Paars der Doppelstangen 7 (Seiten des gleichschenkligen Dreiecks) sind mit den Zapfen 10 und 11 gelenkig verbunden.

Da der Winkel 8 an der Spitze des gleichschenkligen Dreiecks offen ist, ist jede Doppelstange 7 mit dem Schlitten 3 ebenfalls gelenkig verbunden, um den normalen Betrieb der Schnellkupplung zu sichern. Dabei sind die Doppelstangen 7 an der Verbindungsstelle miteinander mittels eines Paars von Zahnrädern 12 gegenseitig verbunden. Das ermöglicht es, die maximale Steifigkeit der nicht geschlossenen Dreiecke und somit auch der gesamten Konstruktion zu erreichen.

Unter Berücksichtigung des verminderten Gewichts hat die Schnellkupplung eine optimale Anzahl von Doppelstangen 7 und zwar sechs Stück. Da die Unrundheit der Rohrenden, wie bereits oben erwähnt, 8 mm erreichen und die Verbindungssicherheit wesentlich beeinträchtigen kann, ist je eine Ausgleichsbaugruppe 13 in jede Doppelstange 7 eingebaut. Die Ausgleichsbaugruppe 13 besteht aus einem Führungsbolzen 14 und darauf aufgesetzten Tellerfedern 15.

Um zwei Rohre vor ihrer Beschichtung mit Polyäthylen zu verbinden, wird die Kupplung in ein Loch eines der Rohre so eingesetzt, dass die Stützflächen 4 der Einstellschlitten 3 im Kontakt mit der Rohrinnenfläche stehen und dass das Rohrende sich gegen die Ringscheibe 1 der Schnellkupplung abstützt. Danach wird die Antriebsspindel 9 der Antriebsvorrichtung gedreht und die Schnellkupplung im Rohr aufgespreizt. Wird die Antriebsspindel 9 im Uhrzeigersinn gedreht, fängt der Zapfen 10 an, sich entlang der Antriebsspindel 9 zu bewegen und dem Zapfen 11 näher zu kommen und treibt somit das Zahnradpaar 12 an. Dabei werden der Winkel 8 an der Spitze und die Basislänge des gleichschenkligen Dreiecks kleiner, weil die auseinandergehenden Enden der Doppelstangen 7 sich näher kommen. Die dadurch entstehende Spreizkraft der Zapfen 10 und 11 wird von den Schlitten 3, die vom Mittelpunkt aus beginnen auseinanderzugehen, über die Doppelstangen 7 weitergeleitet, wobei die Stütz-flächen 4 an die Rohrinnenfläche angepresst werden.

Liegt eine Unrundheit der Rohre vor, so presst eine Ausgleichsbaugruppe 13 die hängenbleibenden Schlitten 3 dank der Elastizität von Tellerfedern 15, die sich auf dem Führungsbolzen 14 bewegen, nach, bis die Schlitten 3 die Stützflächen 4 der Rohrinnenfläche berühren.

Das zu verbindende Ende des zweiten Rohrs wird auf die Oval-Kegelrollen 5 bis zum Anschlag gegen die Ringscheibe 1 aufgesetzt, indem das Rohr sich längsläufig bewegt. Dabei fahren die Oval-Kegelrollen 5 dicht in das Loch hinein und stellen eine zuverlässige Verbindung mit dem ersten Rohr dank der erhöhten Reibung des Reibstoffs eines Einsatzstücks 6 gegen die Rohrinnenfläche sicher.

Die Demontage (Abnahme) der Schnellkupplung erfolgt in umgekehrter Reihenfolge. Beim Drehen der Antriebsspindel 9 entgegen dem Uhrzeigersinn wird der Abstand zwischen den Zapfen 10, 11 und den auseinandergehenden Enden der Doppelstangen 7 größer, und die Wirkung der Spreizkraft auf die Schlitten 3 hört auf. Die Schlitten 3 fangen an, sich zum Mittelpunkt hin zu bewegen. Dabei werden die Stützflächen 4 von der Rohrinnenfläche zurückgeführt. Die Schnellkupplung wird frei abgenommen, um im verfahrenstechnischen Vorgang wiederholt benutzt werden zu können.

Somit ermöglicht es die Einführung der oben genannten kennzeichnenden Merkmale in die Konstruktion der Schnellkupplung, ihr Gewicht bis auf 90 kg zu vermindern und die auf die Stützfläche 4 jedes Schlittens 3 übertragbare Spreizkraft auf 15 Tonnen zu erhöhen. Unter Berücksichtigung der Anzahl der Führungsschlitten 3 (sechs Stück) macht die von der Konstruktion auf die Wände der Rohrenden erzeugte Gesamtkraft 90 Tonnen aus. Das erhöht wesentlich die Verbindungssicherheit. Dabei werden die Mängel des Prototyps beseitigt und ein wirtschaftlicher Nebeneffekt erreicht, weil der Polyäthylenverbrauch vermindert wird.

Die erfindungsgemäße Schnellkupplung kann in einem beliebigen Maschinenbaubetrieb in Massenfertigung auf Universalanlagen unter Einsatz von marktüblichen in- und ausländischen Materialien hergestellt werden.

## Patentansprüche

1. Schnellkupplung mit einer Ringscheibe (1) mit einer darauf aufgesetzten Spreizvorrichtung (2), an deren Umfang Einstellschlitten (3) mit Stützflächen (4) und Oval-Kegelrollen (5) angeordnet sind, um die Schnellkupplung aufzustellen und in ein Rohr einzufahren, und mit einem Schraubenantrieb (9, 10, 11) zur Sicherstellung der Funktion der Schnellkupplung,
**dadurch gekennzeichnet,**
**dass** die Spreizvorrichtung (2) in Form von gleichmäßig am Kreisumfang der Ringscheibe (1) verteilten und radial ausgerichteten hohlen Doppelstangen (7) ausgebildet ist, wobei jedes Paar der Doppelstangen (7) ein gleichschenkliges Dreieck mit einem an der Spitze geöffneten Winkel (8) und einer Antriebsspindel (9) an der Basis bildet, und
**dass** die Enden der auseinandergehenden Doppelstangen (7) mit der Basis beweglich gegenseitig verbunden sind.

2. Schnellkupplung nach Anspruch 1,
**dadurch gekennzeichnet,**
**dass** die auseinandergehenden Enden jedes Paars der Doppelstangen (7) mit einer Antriebsspindel (9) mit Hilfe von Zapfen (10, 11) verbunden sind, wobei in einem der Zapfen (10) ein Schraubengewinde ausgebildet ist, welches dem Spindelgewinde gleich ist, und wobei der andere Zapfen (11) ein Loch mit einem Lager zur Aufnahme der Antriebsspindel (9) hat.

3. Schnellkupplung nach Anspruch 1,
**dadurch gekennzeichnet,**
**dass** jede Doppelstange (7) eine Ausgleichsbaugruppe (13) aufweist, die aus einem Führungsbolzen (14) und darauf aufgesetzten Tellerfedern (15) besteht.

4. Schnellkupplung nach Anspruch 1,
**dadurch gekennzeichnet,**
**dass** ein Paar von Zahnrädern (12) an der Verbindungsstelle der Doppelstangen (7) des geöffneten Winkels (8) des Dreiecks angeordnet ist, wobei die Zahnräder (12) miteinander in Eingriff kommen.

5. Schnellkupplung nach Anspruch 1,
**dadurch gekennzeichnet,**
**dass** am Kreisumfang der Seitenfläche jeder Oval-Kegelrolle (5) ein Einsatzstück (6) aus einem Reibstoff ausgebildet ist.

## Claims

1. A quick-action coupling with an annular disk (1) with a spraying device (2) mounted thereon, on the circumference of which adjusting slides (3) with support surfaces (4) and oval tapered rollers (5) are arranged, in order to mount the quick-action coupling and to retract it into a tube, and with a screw drive (9, 10, 11) in order to ensure the function of the quick-action coupling,
**characterized in**
**that** the spray device (2) is designed in the form of hollow double rods (7) distributed uniformly on the circular circumference of the annular disk (1) and aligned radially, wherein each pair of double rods (7) forms a isosceles triangle with an angle (8) opened at the tip and drive spindle (9) at the base, and
**that** the ends of the diverging double rods (7) are movably mutually connected with the base.

2. A quick-action coupling according to Claim 1,
**characterized in**
**that** the diverging ends of each pair of double rods (7) are connected with a drive spindle (9) by means of pins (10, 11), wherein in one of the pins (10) a helical thread is formed, which is the same as the spindle thread, and wherein the other pin (11) has a hole with a bearing for accommodating the drive spindle (9).

3. A quick-action coupling according to Claim 1,
**characterized in**
**that** each double rod (7) has a counterbalance assembly (13),which consists of a guide pin (14) and a disk spring (15) mounted thereon.

4. A quick-action coupling according to Claim 1,
**characterized in**
**that** a pair of gear wheels (12) is arranged at the connection point of the double rods (7) of the opened angle (8) of the triangle, wherein the gear wheels (12) come into engagement with one another.

5. A quick-action coupling according to Claim 1,
**characterized in**
**that** an insert piece (6) made of a friction material is formed on the circular circumference of the side surface of each oval tapered roller (5).

## Revendications

1. Couplage rapide avec une rondelle annulaire (1) avec un dispositif d'expansion (2), sur la circonférence duquel sont disposées des chariots de réglage (3) avec des surfaces d'appui (4) et des rouleaux coniques ovales (5), afin de poser le couplage rapide et de l'introduire dans un tube, avec un entraînement à vis (9, 10, 11) pour l'exécution de la fonction de couplage rapide, **caractérisé en ce que** le dispositif d'expansion (2) est conçu sous la forme de doubles tiges (7) creuses réparties régulièrement sur la circonférence circulaire de la rondelle annulaire (1) et orientées radialement, chaque paire de doubles tiges (7) formant un triangle équilatéral avec un angle (8) ouvert au niveau de la pointe et une broche d'entraînement (9) au niveau de la base et
**en ce que** les extrémités des doubles tiges (7) qui s'écartent sont reliées de manière mobile entre elles avec la base.

2. Couplage rapide selon la revendication 1,
**caractérisé en ce que**
les extrémités qui s'écartent de chaque paire de doubles tiges (7) sont reliées avec une broche d'entraînement (9) à l'aide de pivots (10, 11), moyennant quoi, dans un des pivots (10), se trouve un filetage de vis, qui est identique au filetage de la broche et l'autre pivot (11) comprenant un trou avec un palier pour le logement de la broche d'entraînement (9).

3. Couplage rapide selon la revendication 1,
**caractérisé en ce que**
chaque double tige (7) comprend un sous-ensemble d'équilibrage (13) qui est constitué d'une tige de guidage (14) et des rondelles ressorts (15) posées dessus.

4. Couplage rapide selon la revendication 1,
**caractérisé en ce que**
une paire de roues dentées (12) est disposée au niveau du point de liaison des doubles tiges (7) de l'angle ouvert (8) du triangle, les roues dentées (12) s'engrenant entre elles.

5. Couplage rapide selon la revendication 1,
**caractérisé en ce que**
sur la circonférence circulaire de la surface latérale de chaque rouleau conique ovale (5) se trouve un insert (6) en matière abrasive.
